# EUROPEAN PATENT APPLICATION

(11) **EP 1 260 985 A1**
(43) Date of publication of application: **27.11.2002**
(21) Application number: 01112755.2
(22) Date of filing: 25.05.2001
(51) Int. Cl.: G11B 27/034, G11B 27/32, G11B 27/34, H04N 5/85

(54) **Method and apparatus for editing a data stream on a DVD recorder**

(71) Applicant: DEUTSCHE THOMSON-BRANDT GMBH, 78048 Villingen-Schwenningen (DE)
(72) Inventor: Ostermann, Ralf, 30167 Hannover (DE); Adolph, Dirk, 30952 Ronnenberg (DE); Li, Hui, Dr., 30419 Hannover (DE); Klausberger, Wolfgang, 30880 Laatzen (DE)
(74) Representative: Hartnack, Wolfgang, Dipl.-Ing.

(57) **Abstract**

The method for editing a data stream on a DVD stream recorder includes: receiving (1) the data stream by the DVD stream recorder, storing stream object files, parsing (2) the stream object files, identifying (3) logical sections based on the result of the parsing, displaying (4) the logical sections to a user and editing (5) the stream object files. This method can be implemented in a DVD stream recorder. It allows a user to conveniently edit received DVD real-time image data.

## Description

The invention relates to a method for editing a data stream on a DVD recorder and to a DVD Stream recorder.

### Background

The DVD (digital versatile disc) Stream Recording system is defined in the DVD Stream Recording Specification "DVD Specifications for Rewritable/Re-recordable Discs, Part 5, Stream Recording, May 2000", and is designed to use rewritable and recordable DVD discs for recording any existing digital bitstreams, editing them and replaying them as bitstreams. According to this Streamer specification, a Stream Object (SOB) is, in general, one recorded bitstream, i.e. one take, which is stored as a part of a Program Stream as described in e.g. ISO/IEC 13818-1, Systems (MPEG-2). A SOB is composed of one or more Stream Packs, each containing a pack header followed by a Stream Packet. A Stream Packet contains further header data and Application Packets (AP_PKT) to each of which an Application Timestamp (ATS) is assigned. These timestamps enable proper application packet delivery during playback.
On the Streamer disc, a Stream Object Unit (SOBU) is the basic unit of a SOB and consists of a constant amount of data, of 64 Kbytes. The Stream Object Units include above Application Packets. Neither the SOBU borders nor the Stream Pack border need to be aligned with Application Packet borders. For data retrieval from the disc and for navigation purposes a Mapping List (MAPL) is generated in the information file for each Stream Object (SOB) wherein to each Stream Object Unit a corresponding specific time duration is assigned.

One feature of the DVD Stream Recording Specification is the possibility of temporary erasure of a cell containing a part of a SOBU or up to several Stream Object Units, followed by either recovery or permanent erasure of the cell. In the case of permanent erasure, any complete Stream Object Units within the cell can be freed for re-use. A cell can start or end at any application packet.

To each usable side of a disc an information file is assigned, the content of which is stored in a memory, e.g. a RAM, that is part of the streamer device.

The DVD video standard leverages several existing audio and video compression and transmission standards, including MPEG-2 video, and for audio AC-3, MPEG and linear PCM. Typically a DVD data stream is received by means of a DVD processing pipeline, for example, from a DVD-ROM drive and/or from a remote device, and converted into a decoded and decompressed digital video signal and a corresponding digital audio signal or corresponding digital audio signals.
A DVD data stream consists of sequential data packets, each of which typically includes various system information, video information and/or audio information. The DVD video decoding pipeline includes a high-level processing stage, namely a system stream parsing stage, a video processing stage and an audio processing stage. Additional information regarding these and other processing stages, and the DVD standard and the relevant parts of the MPEG-2 standard, are provided in the DVD specification, entitled DVD specification, version 1.0, August 1996, and in the MPEG-2 video specification ISO/IEC 13818-2.
In the system stream parsing stage the incoming DVD data stream is split or demultiplexed and/or descrambled into normally three independent streams: an MPEG-2 video stream, an AC-3 or MPEG audio stream and a sub-picture stream.

### Invention

A common disadvantage of prior art DVD stream recorders and methods for DVD stream recording are that they do not allow editing of the received data in a user-friendly way.

The invention aims to provide an improved method for recording a data stream on a DVD stream recorder and an improved DVD stream recorder.

This problem is solved by the method disclosed in claim 1 and the corresponding DVD stream recorder of claim 12.

The invention allows identifying logical sections in the received data such as picture boundaries, a start of a picture and/or other interesting landmarks in the received real-time data. These logical sections can be displayed to a user such that the user can edit the DVD data in a user-friendly way. The editing of the received data stream is performed by mapping the user input operations onto the received data, based on the identified logical sections.

In principle, the inventive method is suited for editing a data stream on a DVD stream recorder, the method including the steps of:
- receiving the data stream;
- storing stream object files containing compressed data, e.g. video and/or audio data;
- automatically parsing the stream object files for identifying logical sections;
- displaying data indicative of the logical sections to a user;
- editing the stream object files based on selected logical sections.

The inventive apparatus includes suitable means that are adapted for carrying out above method.

Advantageous additional embodiments of the invention are disclosed in the respective dependent claims.

### Drawings

Exemplary embodiments of the invention are described with reference to the accompanying drawing, which shows in:

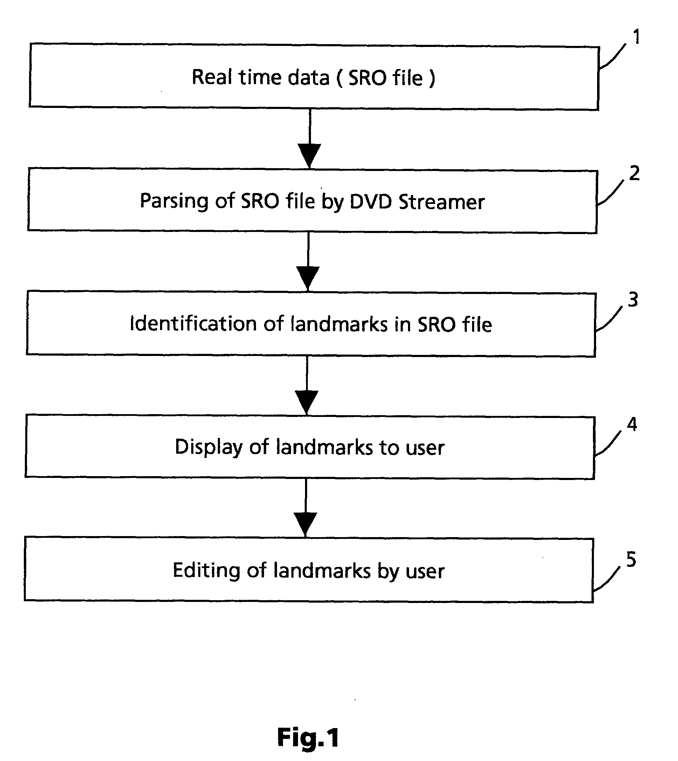

- Fig. 1: a flow chart illustrating a preferred embodiment of the invention.

### Exemplary embodiments

In step 1 of Fig. 1 real-time data is received by a DVD stream recorder. The data is received in data packets that are also referred to as application packets denoted AP_PKT in above DVD standard. The application packets can correspond to one or more MPEG-2 transport stream packets, DV DIF packets or ATM cells.
Usually application packets contain *compressed* data such that deleting one or more of the packets usually does not result in a useful delete operation that makes sense to a user, i.e. a delete operation that is based on e.g. a decompressed complete picture or a desired area within such picture.

The received real-time data stream is stored as a stream object file denoted SRO file. The SRO file is parsed by the DVD streamer in step 2.
In step 3 logical sections - also referred to as landmarks - are identified in the SRO file based on the parsing. This can be done by means of an application aware parser in order to find interesting landmarks like picture boundaries or the like in the compressed bit stream of the SRO file. Header information of the data packets of the SRO file can be used to identify such logical sections as interesting landmarks and picture boundaries. As an alternative, or in addition, MPEG Video start codes can be searched and evaluated, which start codes form the first bytes of the headers.

In step 4 the logical sections are displayed to the user in order to support user-level editing operations.
The logical sections are used to map user-level editing directions onto the data packets. This is done in step 5.

The above described landmark concept is particularly advantageous for editing operations like single picture extraction or removal. For removal of a particular program from a multiplex of programs another approach is more suitable: In this approach the application aware parser first identifies the programs that are contained in the multiplex and informs the user correspondingly, e.g. via a displayed list. Thereupon the user decides or selects which program(s) are to be deleted or edited. The above described sequence of steps 1 to 5 can then (e.g. automatically) be applied with respect to each single user-selected program.

In other words an application aware parser is used to identify the programs in the recorded multiplex. The available programs in the multiplex are displayed to the user and the user selects one or more of the available programs for editing operations. For example the program could be an audio track or a video track. In the case of MPEG-4 (ISO/IEC 14496) content individual content objects are identified by the parser for user selection and editing.

In one embodiment the data stream includes application packets that themselves encapsulate data packets in a different data packet format.

The invention can also be used for the above mentioned DVD-Video system.

## Claims

1. Method for editing a data stream on a DVD stream recorder, the method including the steps of:
- receiving the data stream;
- storing stream object files containing compressed data, e.g. video and/or audio data;
- automatically parsing (2) the stream object files for identifying (3) logical sections;
- displaying (4) data indicative of the logical sections to a user;
- editing (5) the stream object files based on selected logical sections.

2. Method according to claim 1, wherein the data stream is an MPEG-2 transport stream, an MPEG-2 program stream, a DV DIF packet stream or an ATM stream.

3. Method according to claim 1 or 2, wherein said logical sections are identified by means of header information in the data packets of the data stream.

4. Method according to one of claims 1 to 3, wherein the data stream includes application packets.

5. Method according to one of claims 1 to 4, wherein the data stream includes application packets that themselves encapsulate data packets in a different data packet format.

6. Method according to one of claims 1 to 5, wherein a logical section is a picture boundary, a start of a picture and/or a landmark in the data stream being of potential interest to the user.

7. Method according to one of claims 1 to 6, wherein a logical section is a program out of a multiplex of programs that is identified by means of an application aware parser.

8. Method according to one of claims 1 to 7, wherein said data indicative of said displayed logical sections are used to map user-level editing inputs onto data packets of the data stream.

9. Method according to one of claims 1 to 8, wherein a single picture is, or single pictures are, extracted and/or removed.

10. Method according to one of claims 1 to 9, wherein a logical section is a program, an audio track and/or a video track.

11. Computer program product stored on a computer usable medium, comprising computer readable program means for causing a DVD stream recorder to perform a method according to one of claims 1 to 9 when the program is executed by computer means of the DVD stream recorder.

12. DVD stream recorder including means that are adapted for carrying out the steps of one of claims 1 to 10.
